# EUROPEAN PATENT APPLICATION

(11) **EP 3 311 952 A1**
(43) Date of publication of application: **25.04.2018**
(21) Application number: 17190529.2
(22) Date of filing: 12.09.2017
(51) Int. Cl.: B23Q 11/00, F16F 15/36

(54) **BALANCED ROTATIONAL MACHINING**

(30) Priority: 19.10.2016 US 201615297498
(71) Applicant: Goodrich Corporation, Charlotte, NC 28217-4578 (US)
(72) Inventor: WHITTLE, Scott, Springboro, OH Ohio 45066 (US); KLOOS, Philip John, Oakwood, OH Ohio 45419 (US); WATTS, Ouvaughn M., Fairborn, OH Ohio 45324 (US); APPLEGATE, Shawn, Piqua, OH Ohio 45356 (US); DABBELT, Thomas, Union, OH Ohio 45322 (US)
(74) Representative: Iceton, Greg James

(57) **Abstract**

An apparatus (100) includes a rotatable part (110) configured to rotate about a rotational axis and an enclosed channel (120) that is coupled to the rotatable part (110). The enclosed channel (120) circumscribes the rotational axis and is configured to contain a balancing substance that is freely movable within the enclosed channel (120). Also, a vertical turning machine (200) includes a spindle (212) configured to rotate about a rotational axis, a fixture (214) coupled to the spindle (212), and an enclosed channel (220) coupled to at least one of the spindle (212) and the fixture (214). The fixture (214) includes at least one mounting feature configured to secure a workpiece to be machined to the fixture (214) and the enclosed channel (220) circumscribes the rotational axis. The enclosed channel (220) may also be configured to contain a balancing substance that is freely movable within the enclosed channel (220).

## Description

### FIELD

The present disclosure relates to rotary assemblies, and more specifically, to balancing rotary assemblies.

### BACKGROUND

Conventional rotary tools, equipment, machines, mills, and other such rotary assemblies often require time consuming manual calibration to balance their rotational movement. If such rotary assemblies are imbalanced during operation, the efficiency and lifecycle of the rotary assembly can be negatively affected. Additionally, imbalanced operation of rotary assemblies may negatively affect the accuracy and precision of machining results on a subject work piece. Conventional practices for balancing rotary assemblies require manual calibration and repeated monitoring to ensure that the rotary assembly stays balanced during operation.

### SUMMARY

In various embodiments, the present disclosure provides an apparatus that includes a rotatable part configured to rotate about a rotational axis and an enclosed channel that is coupled to the rotatable part. The enclosed channel may circumscribe the rotational axis and may be configured to contain a balancing substance that is freely movable within the enclosed channel.

In various embodiments, the balancing substance includes at least one of an incompressible fluid and a plurality of solid particles. For example, in various embodiments the balancing substance includes a plurality of tungsten polymer beads and/or ball bearings. In various embodiments, the balancing substance includes water. In various embodiments, the balancing substance includes an operating fluid of the rotatable part, such as, for example, a hydraulic fluid or an oil.

In various embodiments, the enclosed channel is integrated with the rotatable part while in various other embodiment the enclosed channel is mounted externally to the rotatable part. The enclosed channel may be substantially concentric with the rotational axis. In various embodiments, the enclosed channel extends in a circular shape around the rotational axis. For example, the circular shape may be substantially perpendicular to the rotational axis. In various embodiments, the enclosed channel has a circular cross-section.

Also disclosed herein, according to various embodiments, is a vertical turning machine. The vertical turning machine may include a spindle configured to rotate about a rotational axis, a fixture coupled to the spindle, and an enclosed channel coupled to at least one of the spindle and the fixture. The fixture may include at least one mounting feature configured to secure a workpiece to be machined to the fixture and the enclosed channel may circumscribe the rotational axis. The enclosed channel may also be configured to contain a balancing substance that is freely movable within the enclosed channel.

According to various embodiments, the balancing substance includes least one of an incompressible fluid and a plurality of solid particles. For example, the balancing substance may include an operating fluid of the vertical turning machine. In various embodiments, the enclosed channel extends in a circular shape around the rotational axis. In various embodiments, the circular shape may be substantially horizontal.

Also disclosed herein, according to various embodiments, is a method of machining a workpiece. The method includes, according to various embodiments, securing the workpiece to a fixture (the fixture may be coupled to a spindle), wherein an enclosed channel containing a balancing substance is coupled to at least one of the spindle, the fixture, and the workpiece. The method may further include rotating the spindle, which causes the balancing substance contained within the enclosed channel to distribute throughout the enclosed channel to balance rotation of the workpiece, the fixture, and the spindle.

The forgoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

FIG. 1 is a schematic block diagram of an apparatus for balanced rotational machining, in accordance with various embodiments;
FIG. 2 illustrates a perspective view of an apparatus for balanced rotational machining, in accordance with various embodiments;
FIG. 3 illustrates a side view of the apparatus of FIG. 2, in accordance with various embodiments;
FIG. 4 illustrates a cross-sectional view of an apparatus for balanced rotational machining, in accordance with various embodiments; and
FIG. 5 is a schematic flowchart diagram of a method of machining a workpiece, in accordance with various embodiments.

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the disclosure, it should be understood that other embodiments may be realized and that logical changes and adaptations in design and construction may be made in accordance with this disclosure and the teachings herein without departing from the scope of the disclosure. Thus, the detailed description herein is presented for purposes of illustration only and not of limitation.

As described above, operating imbalanced rotary assemblies can have negative consequences. For example, an imbalanced rotary assembly can result in reduced operating efficiency and/or a reduced useable life of the rotary assembly. Additionally, imbalanced operation of a rotary assembly may negatively affect the accuracy and precision of machining results on a subject work piece. The apparatus 100 of the present disclosure enables rotary assemblies to automatically achieve dynamic balanced rotation.

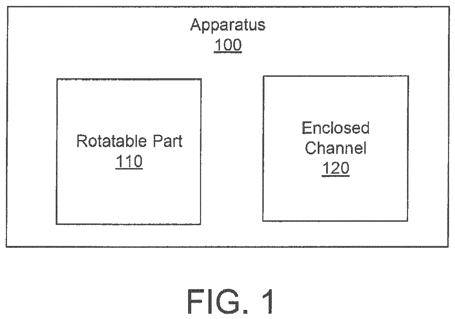

With reference to FIG. 1, and according to various embodiments, the apparatus 100 for balanced rotational machining is disclosed. The apparatus 100 may include a rotatable part 110 and an enclosed channel 120. In various embodiments, the rotatable part 110 is configured to rotate about a rotational axis. For example, the rotatable part 110 may be any component or element that rotates about a rotational axis. In various embodiments, the rotatable part 110 may be a spindle, a rotary fixture, a rotary tool, or a rotary tool holder, among others. The enclosed channel 120 may be coupled to the rotatable part 110 and may circumscribe the rotational axis. The term "enclosed channel" refers to a closed tube that extends around a rotational axis of the rotatable part 110. For example, the enclosed channel 120 may be an enclosed conduit, tube, pipe, etc., that forms an annular structure around the rotational axis. Thus, the term "enclosed" does not refer to the position of the channel relative to other components, but instead refers to a closed chamber. Contained within the enclosed channel 120, according to various embodiments, is a balancing substance that is freely movable within the enclosed channel 120. Additional details pertaining to the rotatable part 110, the enclosed channel 120, and the balancing substance are included below.

During operation of the apparatus 100, the enclosed channel 120 rotates with the rotatable part 110 to which it is coupled, according to various embodiments. In response to rotation of the enclosed channel 120 about the rotational axis, the balancing substance contained within the enclosed channel 120, which is free-moving relative to the enclosed channel 120, distributes throughout the enclosed channel to offset rotational imbalances, according to various embodiments. In other words, the balancing substance may disperse throughout the enclosed channel 120 to occupy one or more positions in the rotating enclosed channel 120 that correspond with one or more portions of the rotatable part 110 that has comparatively less mass (e.g., less dense portions of the entire rotating body of the apparatus 100).

For example, if the rotatable part 110 does not have the enclosed channel 120 coupled thereto and if one side or one portion of the rotatable part 110 has less mass than other sides or portions, the center of mass of the rotatable part 110 would not be aligned with the rotational axis and thus the apparatus 100 would be imbalanced, thereby resulting in vibrations or oscillations during operation. The combined center of mass is the position/location where the combined weighted relative position of the distributed mass sums to zero. According to various embodiments, by coupling the enclosed channel 120 to the rotatable part, the apparatus 100 is able to achieve a stable, balanced operating condition over a wide range of rotational speeds. In various embodiments, the balancing substance, being freely moveable within and through the enclosed channel 120, distributes itself, in response to rotation, along the enclosed channel 120 to dynamically maintain the combined center of mass of the apparatus 100 (including any parts, workpieces, or fixtures that rotate with the apparatus 100) substantially aligned with the rotational axis, thereby tending to correct imbalances and maintaining a stable, balanced rotational motion. In various embodiments, the distribution of the balancing substance through the enclosed channel 120 enables the rotary motion to remain balanced despite changes to the combined center of mass caused by machine wear and/or by the effect of the machining process on the workpiece. In various embodiments, while the combined center of mass of the apparatus 100 (including the mass of any components that co-rotate with the rotatable part 110 and the enclosed channel 120) may not be aligned with the rotational axis when the rotatable part 110 is not in motion, the automatic distribution of the balancing substance through the enclosed channel 120 in response to the rotary motion balances the rotary motion.

In various embodiments, the balancing substance is distributed through the enclosed channel 120 to eliminate, or at least reduce, imbalance of the rotatable part 110 in response to initiation of rotation of the rotatable part 110, or at least before the angular rotation speed reaches a threshold. In various embodiments, for example, once the rotatable part 110 reaches a threshold angular rotation speed, the apparent centrifugal force may have a dominant effect on the balancing substance and thus the balancing substance may be limited in its ability to dynamically circumferentially distribute to correct rotational imbalances. However, according to various embodiments, if the rotatable part has an imbalance, upon initiating rotation of the rotatable part 110 (or at least before the rotatable part 110 reaches the threshold angular rotation speed at which the apparent centrifugal force dominates the effective force exerted on the balancing substance), the balancing substance may be able to circumferentially distribute itself to counterbalance the imbalance. In various embodiments, for example, a portion of the rotatable part 110 may have a comparatively greater mass (e.g., a 'heavy spot'). In response to rotation of the rotatable part 110, but before reaching the threshold angular rotation speed, inertia of the balancing substance may resist the apparent oscillation of the rotatable part 110 caused by the 'heavy spot' and thus the balancing substance may inertially distribute away from the apparent oscillation of the 'heavy spot."

In various embodiments, for example when the rotatable part 110 is a rotatable spindle/fixture to which a workpiece is mounted, the rotatable part 110 and the enclosed channel 120 may be configured to rotate up to about 2,000 rotations per minute ("RPM"). In various embodiments, for example when the rotatable part 110 is a rotary tool or a rotary tool holder, the rotatable part 110 and the enclosed channel 120 may be configured to rotate up to between about 20,000 rotations per minute and about 60,000 rotations per minute.

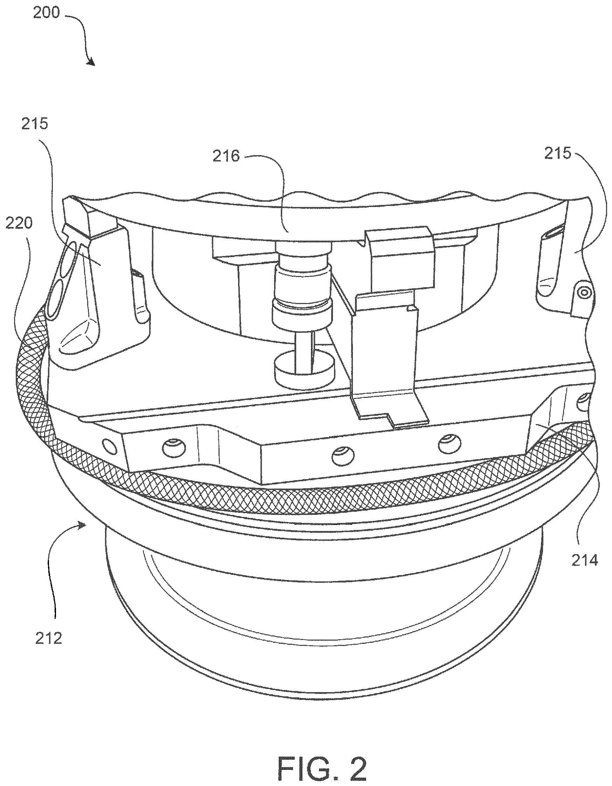

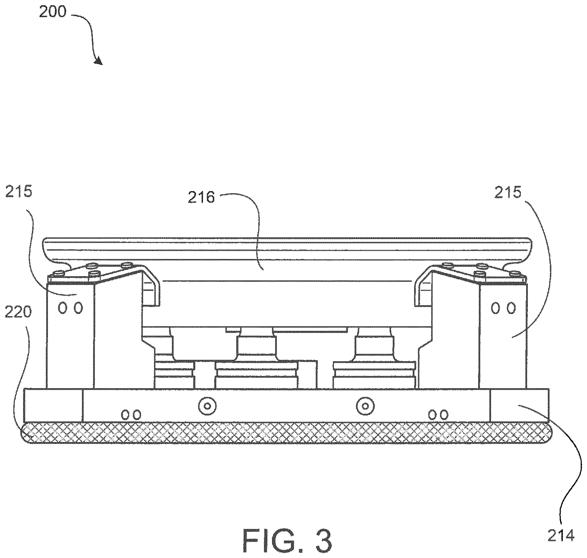

With reference to FIG. 2 and 3 and according to various embodiments, a vertical turning machine 200 is disclosed. As mentioned above, like reference numbers refer to like elements. Accordingly, the vertical turning machine 200 is one implementation of the apparatus 100. That is, the vertical turning machine 200 disclosed herein is but one example, of many, of how the subject matter described above with reference to FIG. 1 can be implemented. Therefore, the scope of the present disclosure is not limited to fixture-devices akin to the vertical turning machine 200 described herein, but the subject matter of the present disclosure may be applicable to various types of rotatable parts, such as spindles, rotary fixtures, rotary tools, rotary tool holders, etc.

The vertical turning machine 200 includes, according to various embodiments, a spindle 212, a fixture 214, and an enclosed channel 220. The vertical turning machine 200 may be used to mill, cut, or otherwise machine a workpiece 216 (e.g., a raw material) that is coupled to the fixture 214. The spindle 212 may be operably coupled to a motor or other power source and may be configured to rotate about a rotational axis. In various embodiments, the fixture 214 is coupled to the spindle 212 and thus is configured to co-rotate with the spindle 212 about the rotational axis. The workpiece 216 may be coupled to the fixture 214 via one or more mounting features 215 and thus may be configured to also co-rotate with the spindle 212 and the fixture 214. The enclosed channel 220 may be coupled to any of the rotatable components, such as the spindle 212, the fixture 214, or even the workpiece 216 itself.

As described above, while in a static, non-rotating condition, the combined center of mass of the vertical turning machine 200, including the spindle 212, the fixture 214, the workpiece 216, and the enclosed channel 220, may not be aligned with the rotational axis and thus may appear to be imbalanced. However, in response to rotary motion of the apparatus 200, the balancing substance in the enclosed channel may be distributed through the enclosed channel 220 to cure the imbalance and maintain a stable, balanced rotary motion over a range of rotating speeds. In various embodiments, the balanced rotary motion of the apparatus 200 enables the work-piece to be precisely and accurately machined (e.g., milled, cut, etc.) because the enclosed channel 220, with its contained balancing substance, prevents vibrations and imbalanced-induced oscillations.

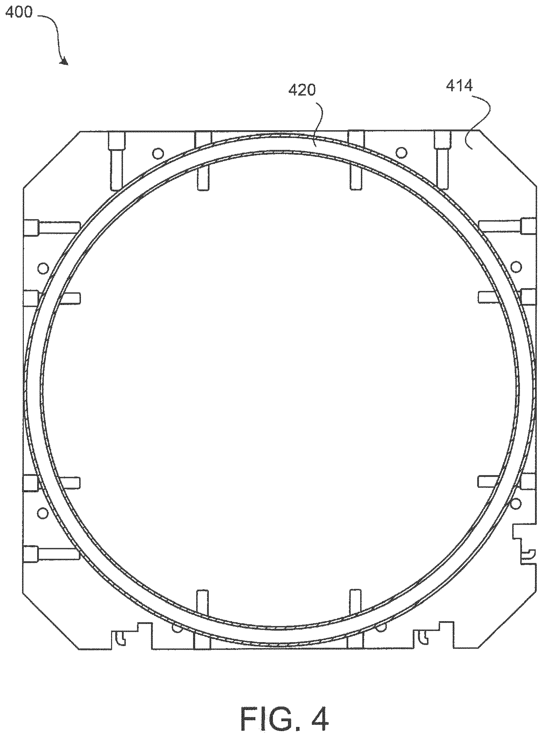

In various embodiments, and with reference to FIG. 1-3, the enclosed channel 120 may be mounted externally to the rotatable part 110. For example, the enclosed channel 220 may be mounted to the spindle 212, the fixture 214, and/or the workpiece 216. In various embodiments, and with reference to FIG. 4, the enclosed channel 420 may be mounted within the rotatable part or may be integrally formed (machined, cast, etc.) in the rotatable part. For example, the enclosed channel 420 of the apparatus 400 shown in FIG. 4 may be integrated in the fixture 414 of the apparatus 400. In various embodiments, the enclosed channel 420 may be integrated formed in the spindle 212 and/or the fixture 214.

In various embodiments, the enclosed channel 120 is substantially concentric with the rotational axis of the apparatus 100. In various other embodiments, the enclosed channel 120 may not be concentric with the rotational axis of the apparatus 100. In various embodiments, the enclosed channel 120 may extend in a circular shape around the rotational axis of the apparatus 100. The circular shape may be perpendicular to the rotational axis of the apparatus 100, according to various embodiments. In various embodiments, the shape of the enclosed channel 120 extending around the rotational axis of the apparatus 100 is non-uniform. That is, the perimeter of the enclosed channel 120 may not be radially equidistant from the rotational axis and yet the balancing substance contained within the enclosed channel 120 may still balance the rotary movement of the apparatus 100. In various embodiments, the cross-section of the enclosed channel 120 may be circular (e.g., tube-like). In various other embodiments, the cross-section of the enclosed channel 120 may be oval, obround, or rectangular, among others.

In various embodiments, the balancing substance is an incompressible fluid and/or a plurality of solid particles. In various embodiments, the incompressible fluid may be water or an operating fluid/liquid used in conjunction with the apparatus 100, among other liquids. For example, the balancing substance may be hydraulic fluid, lubricant, coolant, and/or oil used in conjunction with the rotatable part 110. For example, hydraulic fluid, lubricant, coolant, and/or oil from the motor or power source that drives rotation of the rotatable part 110 may be utilized in the enclosed channel 120 as the balancing substance. In various embodiments, the incompressible fluid may be selected according to the material properties of the enclosed channel 120 so as to not corrode or otherwise deteriorate the structure of the enclosed channel 120.

In various embodiments, the enclosed channel may include a plurality of solid particles, such as ball bearings, beads, etc. For example, in various embodiments the plurality of solid particles is a plurality of tungsten polymer beads. In various embodiments, the mass of the balancing substance may be selected according to the expected/anticipated combined mass of the apparatus 100. For example, the mass of the balancing substance contained within the enclosed channel 120 may be proportional to the combined mass and/or the position of the combined center of mass of the apparatus 100 relative to the rotational axis. In various embodiments, the apparatus 100 may include more than one enclosed channel 120.

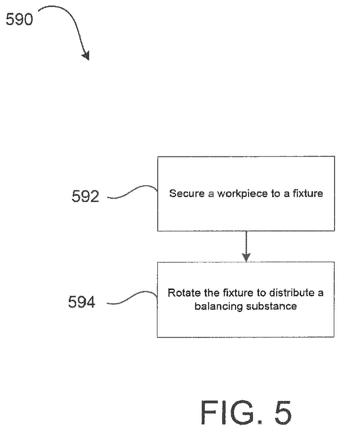

In various embodiments, and with reference to FIG. 5, a method 590 of machining a workpiece is disclosed. The method 590 includes, according to various embodiments, securing the workpiece to a fixture at step 592. As mentioned above, the fixture may be coupled to a spindle, which is operably coupled to a motor or other power source. An enclosed channel containing a balancing substance is also coupled to one or more of the fixture, the spindle, and the workpiece. The method 590 may further include rotating the spindle at step 594. Step 594, according to various embodiments, causes the balancing substance contained within the enclosed channel to automatically distribute throughout the enclosed channel to balance the rotation of the rotating components (e.g., the spindle, the fixture, and the workpiece).

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure.

The scope of the disclosure is accordingly to be limited by nothing other than the appended claims, in which reference to an element in the singular is not intended to mean "one and only one" unless explicitly so stated, but rather "one or more." It is to be understood that unless specifically stated otherwise, references to "a," "an," and/or "the" may include one or more than one and that reference to an item in the singular may also include the item in the plural. All ranges and ratio limits disclosed herein may be combined.

Moreover, where a phrase similar to "at least one of A, B, and C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Also, any reference to attached, fixed, connected, coupled or the like may include permanent (e.g., integral), removable, temporary, partial, full, and/or any other possible attachment option. Different cross-hatching is used throughout the figures to denote different parts but not necessarily to denote the same or different materials.

The steps recited in any of the method or process descriptions may be executed in any order and are not necessarily limited to the order presented. Furthermore, any reference to singular includes plural embodiments, and any reference to more than one component or step may include a singular embodiment or step. Elements and steps in the figures are illustrated for simplicity and clarity and have not necessarily been rendered according to any particular sequence. For example, steps that may be performed concurrently or in different order are illustrated in the figures to help to improve understanding of embodiments of the present disclosure.

Any reference to attached, fixed, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts or areas but not necessarily to denote the same or different materials. In some cases, reference coordinates may be specific to each figure.

Systems, methods and apparatus are provided herein. In the detailed description herein, references to "one embodiment", "an embodiment", "various embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. An apparatus (100) comprising:
a rotatable part (110) configured to rotate about a rotational axis; and
an enclosed channel (120) coupled to the rotatable part (110), wherein the enclosed channel (120) circumscribes the rotational axis and is configured to contain a balancing substance that is freely movable within the enclosed channel (120).

2. The apparatus of claim 1, wherein the balancing substance comprises at least one of an incompressible fluid and a plurality of solid particles.

3. The apparatus of claim 1, wherein the balancing substance comprises a plurality of tungsten polymer beads.

4. The apparatus of claim 1, wherein the balancing substance comprises a plurality of ball bearings.

5. The apparatus of claim 1, wherein the balancing substance comprises water.

6. The apparatus of claim 1, wherein the balancing substance comprises an operating fluid of the rotatable part (110).

7. The apparatus of claim 6, wherein the operating fluid of the rotatable part (110) comprises hydraulic fluid, or wherein the operating fluid of the rotatable part (110) comprises oil.

8. The apparatus of claim 1, wherein the enclosed channel (120) is integrated with the rotatable part (110); or wherein the enclosed channel (120) is mounted externally to the rotatable part (110); or wherein the enclosed channel (120) is substantially concentric with the rotational axis.

9. The apparatus of claim 1, wherein the enclosed channel (120) extends in a circular shape around the rotational axis, and preferably wherein the circular shape is substantially perpendicular to the rotational axis.

10. The apparatus of claim 1, wherein the enclosed channel (120) comprises a circular cross-section.

11. A vertical turning machine (200) comprising:
a spindle (212) configured to rotate about a rotational axis;
a fixture (214) coupled to the spindle (212), wherein the fixture (214) comprises at least one mounting feature configured to secure a workpiece to be machined to the fixture (214); and
an enclosed channel (220) coupled to at least one of the spindle (212) and the fixture (214), wherein the enclosed channel (220) circumscribes the rotational axis and is configured to contain a balancing substance that is freely movable within the enclosed channel (220).

12. The vertical turning machine of claim 11, wherein the balancing substance comprises least one of an incompressible fluid and a plurality of solid particles.

13. The vertical turning machine of claim 11, wherein the balancing substance comprises an operating fluid of the vertical turning machine (200).

14. The vertical turning machine of claim 11, wherein the enclosed channel (220) extends in a circular shape around the rotational axis, and preferably wherein the circular shape is substantially horizontal.

15. A method of machining a workpiece, the method comprising:
securing the workpiece to a fixture (214), wherein the fixture (214) is coupled to a spindle (212), wherein an enclosed channel (220) containing a balancing substance is coupled to at least one of the spindle (212), the fixture (214), and the workpiece; and
rotating the spindle (212), wherein rotating the spindle (212) causes the balancing substance contained within the enclosed channel (220) to automatically distribute throughout the enclosed channel (220) to balance rotation of the workpiece, the fixture (214), and the spindle (220).
